# EUROPÄISCHE PATENTSCHRIFT

(11) **EP 1 354 519 B1**
(45) Veröffentlichungstag und Bekanntmachung des Hinweises auf die Patenterteilung: **03.08.2005**
(21) Anmeldenummer: 03008141.8
(22) Anmeldetag: 08.04.2003
(51) Int. Cl.: A23G 3/22, A23G 1/10

(54) **Verfahren und Vorrichtung zum Belüften von fetthaltiger Masse, insbesondere Schokoladenmasse**
Procedure and device for aerating of a fat based mass, in particular of a chocolate mass
Procédé et dispositif pour aérer de la matière grasse, en particulier de masses de chocolat

(30) Priorität: 18.04.2002 DE 10217231
(43) Veröffentlichungstag der Anmeldung: 22.10.2003
(73) Patentinhaber: Sollich KG, 32105 Bad Salzuflen (DE)
(72) Erfinder: Bäumer, Volker, 32108 Bad Salzuflen (DE)
(74) Vertreter: Rehberg Hüppe + Partner

(56) Entgegenhaltungen:
- EP-A- 0 724 836
- WO-A-00/64269
- WO-A-00/78156

## Beschreibung

Die Erfindung betrifft ein Verfahren und eine Vorrichtung zum Belüften von fetthaltiger Masse, insbesondere Schokolademasse an einer Überziehmaschine. Unter dem Belüften einer fetthaltigen Masse wird ganz allgemein die Einarbeitung von feinen Gasblasen, manchmal auch als Mikroblasen bezeichnet, verstanden. Als Gas kommt insbesondere Stickstoff oder Luft in Frage. Wichtig beim Belüften einer solchen fetthaltigen Masse ist der Belüftungsgrad. Es soll ein Masseanteil von 4 bis 25 %, insbesondere etwa von 10 %, der Masse durch das Gas ersetzt werden. Dabei kommt es darauf an, an einer Überziehmaschine den Produktionsprozess so zu steuern, dass der gewünschte Belüftungsgrad hinsichtlich seiner Höhe und Konstanz verlässlich über die Produktionszeit erreicht und eingehalten wird.

Die zur Produktion eingesetzte Überziehmaschine weist in aller Regel ein Gitterband auf, auf dem die zu überziehenden Artikel in liegender Weise durch die Überziehmaschine hindurchgefördert werden. Unterhalb des Gitterbandes besitzt die Überziehmaschine eine Wanne zum Auffangen überschüssiger Masse. Von dieser Wanne führt eine Steigleitung mit Umlaufpumpe zu einem Überziehkopf. Der Überziehkopf ist für eine Umhüllung der Artikel von oben beispielsweise als Schleierkasten oder als Schleierwalze ausgebildet. Mit diesem Überzugskopf wird ein im freien Fall herabfließender Vorhang aus Masse gebildet, durch den die Artikel hindurchgeführt werden. Sofern der Artikel allein oder zusätzlich einen Bodenüberzug bekommen soll, ist der Überzugskopf als eine Bodenwallstation ausgebildet. Entsprechend führt dann die Steigleitung zu dieser Bodenwallstation. Typisch für solche Überziehmaschinen ist es, dass mit einem Überschuss an Masse gearbeitet wird. Es wird immer mehr Masse, als es der Umhüllung des Artikels entspricht, zu dem Überzugskopf gefördert, damit ein vollständiger lückenloser Überzug an dem Artikel entsteht. Die überschüssige Masse wird in der Wanne der Überzugsmaschine aufgefangen und erneut mit Hilfe der Umlaufpumpe in der Steigleitung dem Überzugskopf zugeführt. Der Verbrauch an Masse wird durch frisch temperierte Masse über eine Temperiermaschine zugeführt. Häufig ist auch die Wanne der Überzugsmaschine mit einem Überlauf versehen, damit temporär Masse aus dem Kreislauf zurück zur Temperiermaschine fließen kann. In der Regel ist dann in diesem Rücklauf ein Dekristallisator angeordnet.

Die PCT-Anmeldung mit der Veröffentlichungsnummer WO 00/64269 zeigt ein Verfahren und eine Vorrichtung zum Überziehen von Süßwarenartikeln mit belüfteter Schokolademasse. Die Schokolademasse wird über eine Umlaufpumpe und eine daran anschließende Steigleitung einem Überzugskopf in einer Überziehmaschine zugeführt. In der Steigleitung ist eine Einrichtung zum Einbringen von feinblasigem Gas sowie mindestens eine Einrichtung zum Messen der Dichte der begasten Masse vorgesehen. Die Dichtemesseinrichtung befindet sich in der Nähe des Überzugskopfes. Die belüftete Schokolademasse wird bis zu ihrem Auslass am Überzugskopf unter Überdruck gehalten. Hierzu dient ein entsprechend modifizierter Überzugskopf, der den Druckabbau unmittelbar vor dem Ausfließen der belüfteten Masse auf die Artikel herbeiführt. In einer solchen Überziehmaschine wird, wie allgemein üblich, mit Überschuss gearbeitet, so dass die Umlaufpumpe, die die Schokolademasse in die Steigleitung fördert, aus der Wanne der Überziehmaschine bei dem kontinuierlichen Produktionsprozess bereits belüftete bzw. teilbelüftete Schokolademasse ansaugt. Die Dichtemesseinrichtung dient zur Steuerung der Einrichtung zum Einbringen der feinblasigen Luft, um auf diese Art und Weise den Luftgehalt der über den Überziehkopf ausfließenden belüfteten Schokolademasse zu steuern bzw. konstant zu halten. In der Steigleitung können auch zwei Dichtemesser angeordnet sein, wobei einer vor der Einrichtung zum Einbringen feinblasigen Gases und der andere in der Nähe des Überzugskopfs angeordnet sind. Der eine Dichtemesser bestimmt den Anteil des feinblasigen Gases am Überzugskopf. Der andere Dichtemesser misst und berücksichtigt steuerungsmäßig den Anteil der Luft in der Schokolademasse, die aus der Wanne in die Steigleitung überführt wird. Die Anordnung des oder der Dichtemesser in der Steigleitung oder jedenfalls nahe dem Überzugskopf hat den Vorteil, recht genau auf den Luftanteil in der Schokolademasse einwirken zu können, der auch tatsächlich auf die zu überziehenden Artikel ausgebracht wird. Nachteilig hieran ist, dass in der über den Überzugskopf ausgebrachten Schokolademasse Blasen unterschiedlicher Größe vorhanden sind. Am Überzugskopf ändert sich der Druck in der Schokolademasse, indem der Überdruck abgebaut wird. Dadurch bedingt neigen die größeren Blasen zu einem Austreten aus der Überzugsmasse, und zwar zu einem Zeitpunkt, an dem sich die Überzugsmasse gerade frisch aufgebracht auf dem Artikel befindet. Dies kann dazu führen, dass die Oberfläche der Schokolademasse auf dem Artikel beeinträchtigt wird. Weiterhin besteht dabei die Gefahr, dass der in dem Belüftungsgrad in der auf dem Artikel erstarrenden Schokolademasse nicht demjenigen entspricht, der über den Dichtemesser gemessen wird. Unmittelbar vor dem Überzugskopf kann auch ein Durchflussbegrenzer vorgesehen sein, der einem Austreten von Gasblasen aus der Schokolademasse entgegenwirken soll. Weiterhin ist es möglich, die Belüftung nicht in der Steigleitung durchzuführen, sondern parallel zur Steigleitung einen zusätzlichen Teilkreislauf vorzusehen. Dieser zusätzliche Teilkreislauf sieht vor, Masse aus der Wanne über einen Dekristallisator der Temperiermaschine zuzuführen und zusammen mit frischer Schokolademasse zu temperieren, zu belüften und mit der Teilmenge über die Steigleitung unmittelbar oberhalb des Überziehkopfes vor einer Mischeinrichtung zusammenzuführen. Nachteilig daran ist, dass die Belüftung nur in einer relativ kleinen Teilmenge der Schokolademasse durchgeführt wird. Es ist aber auch möglich, die Belüftung an einer relativ großen Teilmenge durchzuführen. Hierzu wird parallel zur Steigleitung ein zusätzlicher Teilkreislauf geschaffen, der frisch temperierte Masse mit Masse aus der Wanne zusammenführt, gemeinsam belüftet und an einer Mischeinrichtung über dem Überziehkopf mit der Teilmenge der Steigleitung zusammenführt. Das Verhältnis der Fördermengen der Pumpen in der Steigleitung und in dem zusätzlichen Teilkreislauf kann über den Dichtemesser verändert werden, um den Belüftungsgrad zu beeinflussen. Beide Pumpen arbeiten gegen den Gegendruck des Überziehkopfes. Der Druckabbau in der Masse findet am Überziehkopf statt. Aber auch dabei sitzt der Dichtemesser, der auch entfallen kann, in der Nähe des Überziehkopfes.

Die PCT-Anmeldung mit der Veröffentlichungsnummer WO 01/30174 A1 zeigt ein Belüftungssystem für Süßwarenmasse, die zumindest ähnliche Flusseigenschaften wie flüssige Schokolademasse hat. In einem gesonderten Vorratsbehälter soll belüftete oder mit Gasblasen versehene Schokolademasse mit etwa konstanter Dichte außerhalb einer Produktionsmaschine vorrätig gehalten werden. Aus diesem Vorratsbehälter soll die Masse dann über mindestens einen Auslass an die Produktionsmaschine abgegeben werden. Der zusätzliche Vorratsbehälter besitzt einen Eingang und einen Ausgang. Vom Ausgang führt eine Zirkulationsleitung mit einer Pumpe zu dem Eingang des zusätzlichen Vorratsbehälters. In der Zirkulationsleitung ist in Strömungsrichtung eine Belüfungseinrichtung und am Ende der Zirkulationsleitung über dem Vorratsbehälter ein einstellbares Begrenzungsventil für den Druckaufbau an der Belüftungseinrichtung vorgesehen. Damit wird ein Überdruck in der Zirkulationsleitung zwischen Belüftungseinrichtung und dem Ende der Zirkulationsleitung über dem Vorratsbehälter aufrechterhalten. In der Zirkulationsleitung kann auch ein Dichtemesser vorgesehen sein. Der Dichtemesser ist dann nahe dem Ende der Zirkulationsleitung bzw. nahe über dem Eingang des Vorratsbehälters angeordnet. An die Zirkulationsleitung ist zusätzlich eine Füllleitung, die von einer Temperiermaschine kommt, angeschlossen.

Der Erfindung liegt die Aufgabe zugrunde, ein Verfahren und eine Vorrichtung zum Belüften von fetthaltiger Masse, insbesondere Schokolademasse, an einer Überziehmaschine aufzuzeigen, mit der es möglich ist, belüftete Überzüge von Artikeln mit hohem und konstantem Belüftungsgrad herzustellen. Weiterhin soll es möglich sein, in einfacher Weise die Überziehmaschine so umstellen zu können, dass wahlweise belüftete oder unbelüftete Überzüge auf die Artikel aufgebracht werden können.

Das Verfahren zum Belüften von fetthaltiger Masse, insbesondere Schokolademasse, an einer Überziehmaschine sieht vor, die Masse in einen ersten Masseanteil und einen zweiten Masseanteil zu unterteilen. Der erste Masseanteil aus der Wanne der Überziehmaschine wird - wie bisher - über eine Steigleitung einem Überziehkopf zugeführt. Der zweite Masseanteil wird in einem zusätzlichen Teilkreislauf belüftet. Das Verfahren kennzeichnet sich erfindungsgemäß dadurch, dass der in dem zusätzlichen Teilkreislauf geförderte zweite Masseanteil in diesem Teilkreislauf unter Überdruck belüftet und entspannt wird, und dass der belüftete und entspannte zweite Masseanteil in die Steigleitung eingebracht und dort mit dem ersten Masseanteil vermischt wird.

Das Verfahren geht davon aus, den bisher bekannten Kreislauf der Masse über die Steigleitung und die darin angeordnete Umlaufpumpe unverändert aufrecht zu erhalten und damit letztendlich eine einzige Leitung, nämlich die Steigleitung, zu haben, die von der Wanne der Überzugsmaschine zu dem Überzugskopf führt, sei es ein Schleierkasten oder eine Bodenwallstation. Damit wird zunächst die Möglichkeit beibehalten, eine solche Überziehmaschine mit normaler unbelüfteter Masse zu betreiben. Die Umlaufpumpe, die in der Regel als Klinkenpumpe ausgebildet sein kann, hat nur die Aufgabe, die Förderhöhe der Steigleitung zu überwinden. Ein nennenswerter erhöhter Überdruck wird damit nicht aufgebaut. Zur Belüftung der Masse wird ein zweiter Masseanteil abgezweigt und in einem zusätzlichen Teilkreislauf geführt. In diesem zusätzlichen Teilkreislauf wird die Belüftung der Masse durchgeführt, d. h. es ist die Belüftungseinrichtung und andererseits ein Druckhalteventil oder eine sonstige Einrichtung, die den Aufbau des Überdruckes für die Belüftung gestattet, vorgesehen. Dieser zusätzliche Teilkreislauf wird im Anfangsbereich der Steigleitung an diese angeschlossen, so dass an der Stelle, an der der erste Masseanteil der Steigleitung und der zweite Masseanteil des zusätzlichen Teilkreislaufs zusammengeführt werden, der gleiche niedrige Druck herrscht, wie er für die Überwindung des von der Steigleitung überbrückten Höhenniveaus erforderlich ist. Insbesondere das Druckhalteventil ist hier an anderer Stelle als im Stand der Technik angeordnet. Es befindet sich nicht mehr unmittelbar oberhalb des Überzugskopfs und wird auch nicht durch die besondere Art und Weise der Ausbildung eines Überzugskopfs realisiert. Damit wird die Steigleitung druckentlastet und die üblicherweise vorgesehene Umlaufpumpe kann ihre Funktion sicher erfüllen, gleichgültig, ob die in der Überziehmaschine überzogenen Artikel mit belüfteter oder unbelüfteter Masse überzogen werden. Die Entspannung des Überdruckes wird in dem zusätzlichen Teilkreislauf durchgeführt, so dass der zweite Masseanteil gleichsam in zwei Stufen entspannt wird, nämlich einmal an dem Druckhalteventil in dem zusätzlichen Teilkreislauf und zum Zweiten am Ende der Steigleitung. Diese zweistufige Expansion ist vorteilhaft für die Größe und Verteilung der Gasblasen in der Masse. Zusätzlich entsteht mit dem neuen Verfahren der Vorteil, dass die beiden Masseanteile in der Steigleitung innig und homogen miteinander vermischt werden können, d. h. die Länge der Steigleitung kann zur Unterbringung eines Mischers und zur Vermischung der beiden Masseanteile sinnvoll genutzt werden. Die gesonderte Anordnung eines Mischers unmittelbar oberhalb des Überzugskopfs entfällt.

Der zweite Masseanteil kann im Anfangsbereich der Steigleitung dem ersten Masseanteil hinzugefügt werden. Dies kann im Einzelnen auf unterschiedliche Weise geschehen. Beispielsweise ist es möglich, den zusätzlichen Teilkreislauf unmittelbar vor oder nach der Umlaufpumpe an die Steigleitung anzuschließen. Auch die Anordnung eines T-Stücks ist dort möglich, insbesondere auf der Druckseite der Umlaufpumpe. Es ist aber auch möglich, den zusätzlichen Teilkreislauf gleichsam zur Überbrückung der Wanne der Überzugsmaschine beispielsweise vom einen Ende der Wanne bis zum anderen anzuordnen und anzuschließen. Auf jeden Fall soll eine Parallelanordnung des zweiten Teilkreislaufs parallel zur Steigleitung vermieden werden.

Weiterhin ist es möglich, dass der zweite Masseanteil der Wanne der Überziehmaschine hinzugefügt wird. Die Hinzufügung des zweiten Masseanteils kann gemeinsam oder getrennt mit dem Anschluss einer Füllleitung für frisch temperierte Masse realisiert werden. Es ist auch möglich, die von der Temperiermaschine herangeführte Füllleitung an den zusätzlichen Teilkreislauf anzuschließen, insbesondere zwischen einer im zusätzlichen Teilkreislauf vorgesehenen Pumpe und der Belüftungseinrichtung.

Eine zur Durchführung des Verfahrens geeignete Vorrichtung zum Belüften von fetthaltiger Masse, insbesondere Schokolademasse, kennzeichnet sich erfindungsgemäß dadurch, dass die Belüftungseinrichtung und ein nachgeschaltetes Druckhalteventil in dem zusätzlichen Teilkreislauf angeordnet sind, und dass der zusätzliche Teilkreislauf an den Anfangsbereich der Steigleitung angeschlossen ist. Das Druckhalteventil ist der Belüftungseinrichtung unmittelbar nachgeordnet und befindet sich damit nahe bei der Belüftungseinrichtung und relativ weit entfernt von dem Überzugskopf, um der Masse die nötige Zeit zur Entspannung zu geben, bevor diese in den Überzugskopf einläuft. Das Druckhalteventil kann der Belüftungseinrichtung unmittelbar nachgeschaltet angeordnet sein, so dass mit ihm der Überdruck in der Belüftungseinrichtung sehr genau und verlässlich eingehalten werden kann. Andererseits wird dieser Überdruck aber nach dem Druckhalteventil wieder abgebaut, so dass ein Druckniveau erreicht wird, welches demjenigen der Steigleitung entspricht, so dass die Masseanteile aus der Steigleitung und dem zusätzlichen Teilkreislauf ohne weiteres zusammengeführt und durchmischt werden können. Der vertikal nach oben geführte Teil der Steigleitung kann sinnvollerweise für die Anordnung eines Mischers genutzt werden, so dass die Anordnung des Mischers unmittelbar oberhalb des Überzugkopfs entbehrlich wird. Damit verringert sich vorteilhaft die notwendige Bauhöhe der Überzugsmaschine.

Es ist lediglich erforderlich, in dem zusätzlichen Teilkreislauf eine Pumpe, eine Belüftungseinrichtung und ein Druckhalteventil in Reihe nacheinander anzuordnen. Es ist durchaus möglich, auf einen Dichtemesser zu verzichten und die Belüftungseinrichtung so einzustellen, dass der gewünschte Belüftungsgrad der Gesamtmasse erreicht wird. Es ist aber auch möglich, dass in dem zusätzlichen Teilkreislauf zwischen Belüftungseinrichtung und Druckhalteventil der Dichtemesser vorgesehen ist. Alternativ kann der Dichtemesser auch nach dem Druckhalteventil, also zwischen Druckhalteventil und dem Anfangsbereich der Steigleitung angeordnet werden. Weiter ist es möglich, den Dichtemesser auch an anderer Stelle, z.B. in einer Parallelleitung zu der Steigleitung, also nach der Expansion vorzusehen. Auch eine Anordnung in der Nähe des Überzugskopfes ist möglich. In all diesen Fällen ist dann zweckmäßig eine Steuer- oder Regeleinrichtung vorgesehen, die ein von dem Dichtemesser abgegebenes Signal verarbeitet und damit die beiden Pumpen in der Steigleitung und in dem zusätzlichen Teilkreislauf und/oder die Belüftungseinrichtung steuert. Auch die Gaszufuhr zu der Belüftungseinrichtung kann an die Steuer- und Regeleinrichtung angeschlossen sein. Durch die relative Steuerung der beiden Pumpen zueinander kann in einfacher Weise auf die Einhaltung eines konstanten Belüftungsgrades Einfluss genommen werden.

Bei dieser Vorrichtung besteht die Möglichkeit, dass die Umlaufpumpe in der Steigleitung als Klinkenpumpe ausgebildet ist. Die Anordnung einer Klinkenpumpe an dieser Stelle ist vorteilhaft, um die Überziehmaschine ohne konstruktive Änderung in der bisherigen Weise zu betreiben, wenn die Artikel mit einer nicht belüfteten Masse überzogen werden sollen. Zugleich kann diese Klinkenpumpe aber auch in Verbindung mit dem zusätzlichen Teilkreislauf genutzt werden, wenn belüftete Masse an die Artikel abgegeben wird. Eine solche Klinkenpumpe bringt nur eine vergleichsweise geringe Menge an Reibungswärme in das System ein. Sie ist in besonderer Weise geeignet, wenn es darum geht, temperierte Schokolademasse in großen Mengen zu fördern, beispielsweise 3000 bis 8000 kg/h, je nach Arbeitsbreite der Überziehmaschine.

Es ist aber auch möglich, dass in dem zusätzlichen Teilkreislauf eine Zahnradpumpe angeordnet ist. In Verbindung damit ist es auch möglich, in der Steigleitung eine Zahnradpumpe anzuordnen. Dies ist insbesondere dann sinnvoll, wenn auf das Verhältnis des ersten Masseanteils relativ zum zweiten Masseanteil steuernd Einfluss genommen werden soll.

Sinnvoll ist es, wenn in der Steigleitung eine Mischeinrichtung angeordnet ist. Die Mischeinrichtung kann insbesondere als statischer Mischer, also ohne bewegte angetriebene Teile, ausgebildet sein. Die Durchmischung der beiden Masseanteile erfolgt damit zwangsläufig in der Steigleitung und ohne besondere Vorkehrungen. Dabei ist es vorteilhaft, wenn die Mischeinrichtung als statischer Mischer ausgebildet ist.

Die Erfindung wird anhand verschiedener Ausführungsformen weiter erläutert und beschrieben. Es zeigen:
- Fig. 1: ein Fließbild mit den wesentlichen Elementen der Vorrichtung in einer ersten Ausführungsform,
- Fig. 2: eine zweite Ausführungsform der Vorrichtung,
- Fig. 3: eine dritte Ausführungsform der Vorrichtung, und
- Fig. 4: eine weitere Ausführungsform der Vorrichtung.

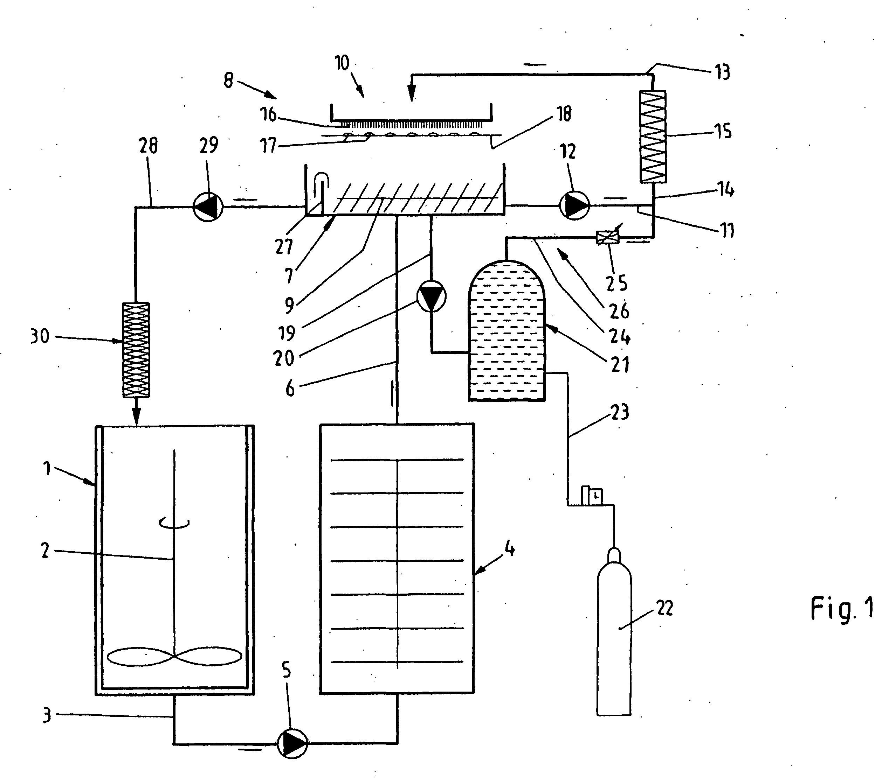

Fig. 1 lässt einen Tank 1 erkennen, der mit einem Rührwerk 2 ausgestattet ist. Der Tank 1 dient zur Aufnahme flüssiger Schokolademasse. Vom Tank 1 führt eine Leitung 3 zum Eingang einer Temperiermaschine 4, die in bekannter Weise etagenartig aufgebaut ist. In der Leitung 3 ist eine Pumpe 5 vorgesehen, die die Schokolademasse durch die Temperiermaschine 4 hindurchführt. Am Ausgang der Temperiermaschine 4 zweigt eine Leitung 6 ab, über die temperierte Schokolademasse einer Wanne 7 einer Überziehmaschine 8 zugeführt wird. In der Wanne 7 befindet sich ein angetriebenes Mischwerk 9. Die Überziehmaschine 8 weist einen Überziehkopf 10 auf, der hier als Schleierkasten ausgebildet ist.

Von der Wanne 7 zweigt eine Ausgangsleitung 11 ab, in der eine Umlaufpumpe 12 angeordnet ist, die vorzugsweise als Klinkenpumpe ausgebildet ist, aber auch als Zahnradpumpe ausgebildet sein kann. Das Ende der Ausgangsleitung 11 ist über ein T-Stück mit einer Steigleitung 13 verbunden, insbesondere mit deren Anfangsbereich 14. In der Steigleitung 13 ist eine Mischeinrichtung 15 vorgesehen. Die Steigleitung 13 führt zum bzw. endet im Überzugskopf 10. Am Überzugskopf 10 tritt die Schokolademasse in Form eines sich im freien Fall nach unten bewegenden Vorhangs 16 aus und strömt über zu überziehende Artikel 17, die auf einem Gitterband 18 aufliegend durch die Überziehmaschine 8 geführt werden. Überschüssige Schokolademasse sammelt sich in der Wanne 7.

Von der Wanne 7 zweigt eine zusätzliche Leitung 19 ab, in der eine Zahnradpumpe 20 angeordnet ist. Die Leitung 19 führt zu einer Belüftungseinrichtung 21, die dazu dient, feinblasiges Gas in die geförderte Schokolademasse einzuarbeiten. Das Gas, insbesondere Stickstoff oder Luft, wird aus einem Behälter 22 über eine Leitung 23 zur Verfügung gestellt bzw. der Belüftungseinrichtung 21 zugeführt.

Von der Belüftungseinrichtung 21 geht eine Leitung 24 aus, in der ein Druckhalteventil 25 angeordnet ist. Die Leitung 24 endet an dem T-Stück bzw. am Anfangsbereich 14 der Steigleitung 13. Zwischen der Zahnradpumpe 20 und dem Druckhalteventil 25, welches als Quetschventil ausgebildet sein kann, wird ein Überdruck aufrecht erhalten, der zur Einarbeitung der Gasblasen in der Belüftungseinrichtung erforderlich ist. Nach dem Druckhalteventil 25 wird die belüftete geförderte Schokolademasse auf den Druck entspannt, der auch in der Ausgangsleitung 11 vorhanden ist. Mit der Leitung 19 und 24 wird ein Teilkreislauf 26 geschaffen, der parallel zu der Ausgangsleitung 11 vorgesehen ist. In diesem Teilkreislauf 26 wird die Belüftung durchgeführt und der belüftete Massestrom wird im Anfangsbereich 14 der Steigleitung 13 mit dem nicht belüfteten Massestrom über die Umlaufpumpe 12 zusammengeführt.

Die Überziehmaschine 8 bzw. die Wanne 7 weist einen Überlauf 27 auf, über den überschüssige Masse, die nicht von der Umlaufpumpe 12 oder der Zahnradpumpe 20 der Wanne 7 entnommen wird, über eine Rückführleitung 28 in den Tank 1 zurückgeführt. In der Rückführleitung 28 ist eine Rückförderpumpe 29 und ein DeKristallisator 30 angeordnet, mit dessen Hilfe in der rückgeführten Schokolademasse vorhandene Kristalle wieder aufgeschmolzen werden.

Im kontinuierlichen Betrieb der Vorrichtung gemäß Fig. 1 gelangt fortwährend frisch temperierte Schokolademasse über die Temperiermaschine 4 und die Leitung 6 in die Wanne 7. In der Wanne 7 vermischt sich die frisch temperierte Masse mit Hilfe des Mischwerks 9 mit der Masse, die von den Artikeln 17 nicht aufgenommen wird. Ein erster Masseteil aus der Wanne 7 der Überziehmaschine 8 wird mit der Umlaufpumpe 12 über die Ausgangsleitung 11 der Steigleitung 13 zugeführt. Ein zweiter Masseanteil wird von der Zahnradpumpe 20 aus der Masse 7 entnommen, in der Belüftungseinrichtung 21 belüftet, im Druckhalteventil 25 entspannt und so über die Leitung 24 dem Anfangsbereich 14 der Steigleitung 13 zugeführt. Beide Masseanteile werden mit etwa gleichem Druck am Anfangsbereich 14 der Steigleitung 13 zusammengeführt und in der Mischeinrichtung intensiv gemischt. Für die Unterbringung der Mischeinrichtung 15, die als statischer Mischer ausgebildet sein kann, eignet sich insbesondere der vertikale Anteil der Steigleitung 13.

Es ist erkennbar, dass im kontinuierlichen Betrieb die überschüssige Masse an der Überziehmaschine 8, die mit der Wanne 7 aufgefangen wird, bereits einen gewissen Belüftungsgrad aufweist. Durch die Vermischung mit frisch temperierter Schokolademasse, die unbelüftet ist, erniedrigt sich dieser Belüftungsgrad. Die Belüftungseinrichtung 21, die nur den zweiten Masseanteil aus der Wanne 7 belüftet, ergänzt den Belüftungsgrad der zusammengemischten Masse in der Steigleitung bzw. der Mischeinrichtung, so dass auf diese Art und Weise ein konstanter Belüftungsgrad eingehalten wird. Die Schokolademasse wird mit diesem Belüftungsgrad dem Überziehkopf 10 der Überziehmaschine 8 zugeführt.

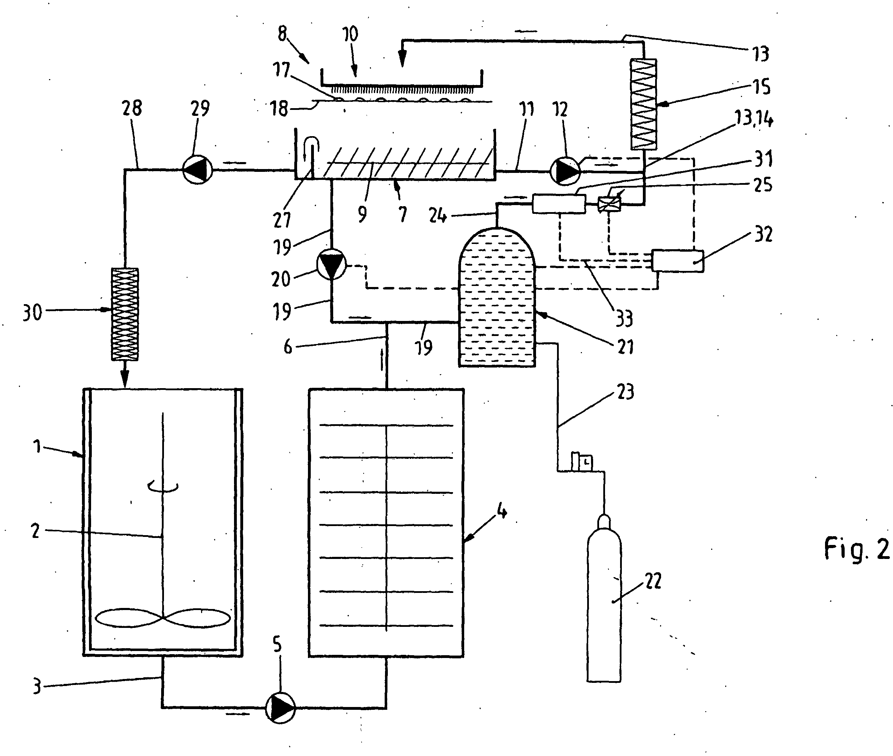

Die Ausführungsform der Anlage gemäß Fig. 2 ist zunächst ähnlich aufgebaut wie Fig. 1, weshalb auf die vorangehende Beschreibung verwiesen werden kann. Die Leitung 6, die am Ausgang der Temperiermaschine 4 angeschlossen ist und über die frisch temperierte Schokolademasse in das System eingebracht wird, ist hier jedoch nicht an die Wanne 7, sondern an die Leitung 19, und zwar stromab der Zahnradpumpe 20 angeschlossen. Sie kann auch stromauf der Zahnradpumpe 20 an die Leitung 19 angeschlossen sein. Damit ist sichergestellt, dass die frisch temperierte Masse aus der Temperiermaschine 4 auf jeden Fall in ihrem ersten Umlauf bereits durch die Belüftungseinrichtung 28 geführt wird. Auch hier führt die Leitung 24 von der Belüftungseinrichtung 21 zum Anfangsbereich 14 der Steigleitung 13. In diese Leitung 24 ist dem Druckhalteventil 25 vorgeschaltet ein Dichtemesser 31 vorgesehen. Der Dichtemesser 31 kann auch bei der Anlage gemäß Fig. 1 an gleicher Stelle angeordnet sein. Weiterhin ist eine Steuer- oder Regeleinrichtung 32 vorgesehen. Die Steuer- oder Regeleinrichtung 32 erhält Signale von dem Dichtemesser 31, und zwar über eine elektrische Leitung 33. Über die Steuer- oder Regeleinrichtung 32 wird sowohl die Belüftungseinrichtung 21 als auch die Zahnradpumpe 20 sowie das Druckhalteventil 25 und die Umlaufpumpe 12 angesteuert. Auf diese Art und Weise wird der Überdruck in der Belüftungseinrichtung 21 aufrecht erhalten und nach dem Druckhalteventil 25 die Expansion durchgeführt. Die jeweiligen Mengen, die mit der Umlaufpumpe 12 einerseits und der Zahnradpumpe 20 andererseits umgewälzt werden, können in ihrem Verhältnis zueinander eingeregelt werden, um so den Belüftungsgrad zu steuern und auf diesen einzuwirken. In diesem Fall sollte die Umlaufpumpe 12 ebenso als Zahnradpumpe ausgebildet sein.

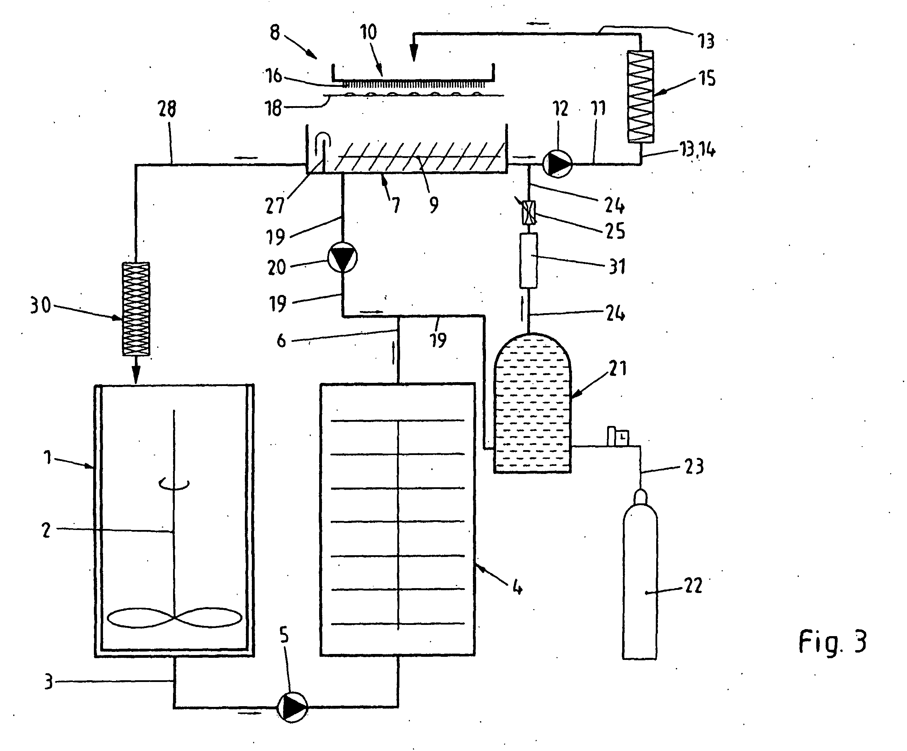

Die Ausführungsform gemäß Fig. 3 schließt an die beiden zuvor gezeigten Ausführungsformen an. Die Leitung 24, die von der Belüftungseinrichtung 21 ausgeht, ist hier stromauf zu der Umlaufpumpe 12 an die Leitung 11 angeschlossen. Der Anschluss kann auch direkt am Anfang der Leitung 11 bzw. Ende der Wanne 7 vorgesehen sein. In der Leitung 24 ist dem Druckhalteventil 25 vorgeschaltet ein Dichtemesser 31 vorgesehen, der ein Ausgangssignal für eine nicht dargestellte Steuer- oder Regeleinrichtung abgibt, die ebenso ausgebildet und angeschlossen sein kann, wie dies bei der Anlage gemäß Fig. 2 gezeigt ist. In der Leitung 28 fehlt hier eine Rückförderpumpe 29, so dass die überschüssige Masse unter Schwerkrafteinwirkung in den Tank 1 zurückgelangt.

Wesentlich ist für alle Ausführungsformen, dass die gesamte Steigleitung 13 einschließlich der dort vorgesehenen Mischeinrichtung 15 nicht mit dem Überdruck belastet wird, der in der Belüftungseinrichtung 21 herrschen muss. Die belüftete Masse, die aus der Belüftungseinrichtung 21 austritt, wird vielmehr über das Druckhalteventil 25 entspannt und damit mit etwa gleichem Druck dem ersten Masseanteil hinzugefügt, der aus der Wanne 7 entnommen und mit der Umlaufpumpe 12 umgewälzt wird.

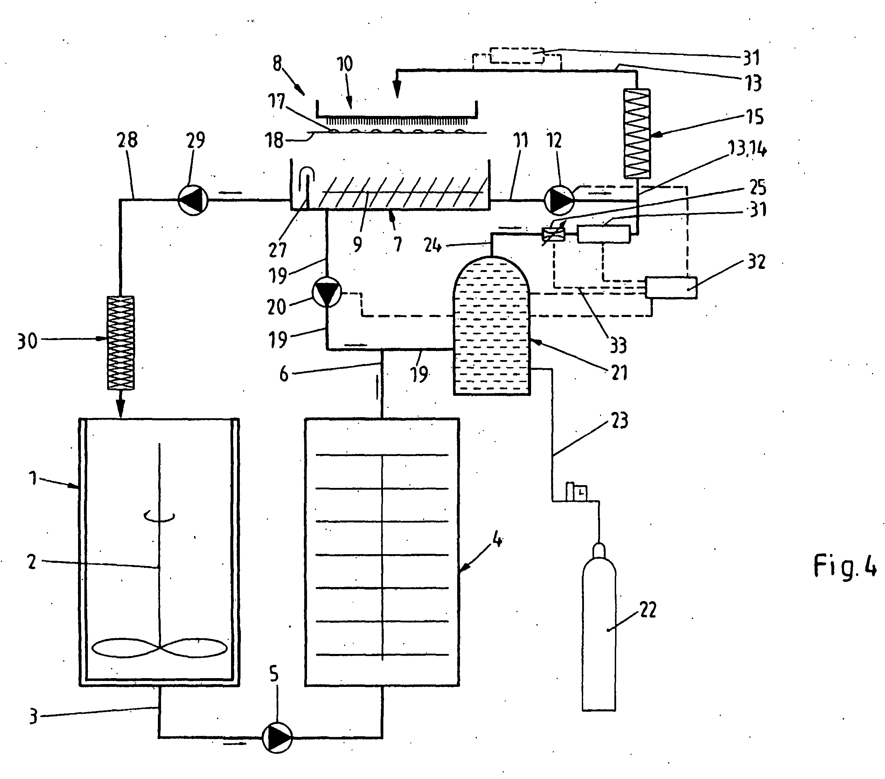

Fig. 4 zeigt eine weitere Ausführungsmöglichkeit der Vorrichtung, die auf den vorangehenden Ausführungsformen, insbesondere derjenigen gemäß Fig. 2, aufbaut. Anders als dort ist jedoch die Reihenfolge der Elemente in der Leitung 24 verändert. Die Leitung 24 führt vom Ausgang der Belüftungseinrichtung 21 bis zum T-Stück bzw. Anfangsbereich 14 der Steigleitung 13. In dieser Leitung 24 ist zunächst das Druckhalteventil 25 und erst stromab der Dichtemesser 31 angeordnet. Der Dichtemesser 31 sitzt also hier im gleichsam drucklosen Teil der Leitung 24, also nach der ersten Expansion der Masse, die am Druckhalteventil 25 stattfindet.

Alternativ, wie in gestrichelter Linienführung angedeutet, kann der Dichtemesser 31 auch im Bereich der Steigleitung 13 angeordnet sein, und zwar entweder vor oder nach dem Mischer 15. Eine besonders sinnvolle Ausführungsmöglichkeit ist in der gestrichelten Darstellung verdeutlicht. Hier sitzt der Dichtemesser 31 in einer Parallelleitung zu einem Abschnitt der Steigleitung 13, wobei das Leitungsnetz mit entsprechenden (nicht dargestellten) Ventilen o. dgl. ausgestattet sein kann. Damit ergibt sich vorteilhaft die Möglichkeit, nur einen kleinen Teil der umgewälzten Masse durch den Dichtemesser 31 zu leiten und so einen klein dimensionierten Dichtemesser 31 kostengünstig einzusetzen, der trotzdem eine verlässliche Steuerung bzw. Regelung der Anlage über die Steuer- und Regeleinrichtung 32 zulässt. Es versteht sich, dass auch in diesem Fall eine elektrische Verbindungsleitung (nicht dargestellt) zu der Steuer- oder Regeleinrichtung 32 besteht. Die Anordnung eines Dichtemessers 31 nach dem Druckhalteventil 25 ist auch insofern vorteilhaft, als dies eine genauere Signalermittlung des Belüftungsgrades der Masse ermöglicht. Die Steuerung bzw. Regelung wird damit präziser.

### BEZUGSZEICHENLISTE

- 1 -: Tank
- 2 -: Rührwerk
- 3 -: Leitung
- 4 -: Temperiermaschine
- 5 -: Pumpe
- 6 -: Leitung
- 7 -: Wanne
- 8 -: Überziehmaschine
- 9 -: Mischwerk
- 10 -: Überziehkopf

- 11 -: Ausgangsleitung
- 12 -: Umlaufpumpe
- 13 -: Steigleitung
- 14 -: Anfangsbereich
- 15 -: Mischeinrichtung
- 16 -: Vorhang
- 17 -: Artikel
- 18 -: Gitterband
- 19 -: Leitung
- 20 -: Zahnradpumpe

- 21 -: Belüftungseinrichtung
- 22 -: Behälter
- 23 -: Leitung
- 24 -: Leitung
- 25 -: Druckhalteventil
- 26 -: Teilkreislauf
- 27 -: Überlauf
- 28 -: Rückführleitung
- 29 -: Rückförderpumpe
- 30 -: De-Kristallisator

- 31 -: Dichtemesser
- 32 -: Steuer- oder Regeleinrichtung
- 33 -: el. Leitung

## Patentansprüche

1. Verfahren zum Belüften von fetthaltiger Masse, insbesondere Schokolademasse, an einer Überziehmaschine (8), bei der ein erster Masseanteil aus der Wanne (7) der Überziehmaschine (8) über eine Steigleitung (13) einem Überziehkopf (10) zugeführt wird und ein zweiter Masseanteil in einem zusätzlichen Teilkreislauf belüftet wird, **dadurch gekennzeichnet, dass** der in dem zusätzlichen Teilkreislauf (26) geförderte zweite Masseanteil in diesem Teilkreislauf unter Überdruck belüftet und entspannt wird, und dass der belüftete und entspannte zweite Masseanteil in die Steigleitung (13) eingebracht und dort mit dem ersten Masseanteil vermischt wird.

2. Verfahren nach Anspruch 1, **dadurch gekennzeichnet, dass** der zweite Masseanteil im Anfangsbereich (14) der Steigleitung (13) dem ersten Masseanteil hinzugefügt wird.

3. Verfahren nach Anspruch 1, **dadurch gekennzeichnet, dass** der zweite Masseanteil der Wanne (7) der Überziehmaschine (8) hinzugefügt wird.

4. Vorrichtung zum Belüften von fetthaltiger Masse, insbesondere Schokolademasse, mit einer Überziehmaschine (8), die eine Steigleitung (13) mit Umlaufpumpe (12) zur Förderung eines ersten Masseanteils aus der Wanne (7) der Überziehmaschine (8) zu einem Überziehkopf (10) aufweist und bei der ein zusätzlicher Teilkreislauf mit einer Belüftungseinrichtung (21) vorgesehen ist, **dadurch gekennzeichnet, dass** die Belüftungseinrichtung (21) und ein nachgeschaltetes Druckhalteventil (25) in dem zusätzlichen Teilkreislauf (26) angeordnet sind, und dass der zusätzliche Teilkreislauf (26) an den Anfangsbereich (14) der Steigleitung (13) angeschlossen ist.

5. Vorrichtung nach Anspruch 4, **dadurch gekennzeichnet, dass** in dem zusätzlichen Teilkreislauf (26) zwischen Belüftungseinrichtung (21) und Druckhalteventil (25) ein Dichtemesser (31) vorgesehen ist.

6. Vorrichtung nach Anspruch 5, **dadurch gekennzeichnet, dass** eine Steuer- oder Regeleinrichtung (32) vorgesehen ist, die ein von dem Dichtemesser (31) abgegebenes Signal verarbeitet und damit die beiden Pumpen (12, 20) in der Steigleitung (13) und in dem zusätzlichen Teilkreislauf (26) und/oder die Belüftungseinrichtung (21) steuert.

7. Vorrichtung nach Anspruch 4, **dadurch gekennzeichnet, dass** die Umlaufpumpe (12) in der Steigleitung (13) als Klinkenpumpe ausgebildet ist.

8. Vorrichtung nach Anspruch 4, **dadurch gekennzeichnet, dass** in dem zusätzlichen Teilkreislauf (19, 26) eine Zahnradpumpe (20) angeordnet ist.

9. Vorrichtung nach Anspruch 4, **dadurch gekennzeichnet, dass** in der Steigleitung (13) eine Mischeinrichtung (15) angeordnet ist.

10. Vorrichtung nach Anspruch 9, **dadurch gekennzeichnet, dass** die Mischeinrichtung (15) als statischer Mischer ausgebildet ist.

## Claims

1. Method for the aeration of a fat based mass, in particular of a chocolate mass, in a coater (8), in which a first part of the mass from the tub (7) of the coater (8) is conveyed to a coating head (10) via an ascending pipeline (13) and a second part of the mass is aerated in an additional partial circuit, **characterized in that** the second part of the mass being conveyed in the additional partial circuit (26) is aerated under pressure above atmospheric and expands, and **in that** the second part of the mass being aerated and expanded is introduced in the ascending pipeline (13) and mixed there with the first part of the mass.

2. Method of claim 1, **characterized in that** the second part of the mass is introduced to the first part of the mass at the beginning (14) of the ascending pipeline (13).

3. Method of claim 1, **characterized in that** the second part of the mass is introduced in the tub (7) of the coater (8).

4. Apparatus for the aeration of a fat based mass, in particular of a chocolate mass, with a coater (8) including an ascending pipeline (13) containing a circulation pump (12) to convey a first part of the mass from the tub (7) of the coater (8) to a coating head (10) and including an additional partial circuit containing an aeration device (21), **characterized in that** the aeration device (21) and a pressure keeping valve (25) located downstream the aeration device are arranged in the additional partial circuit (26), and **in that** the additional partial circuit (26) is connected with the beginning (14) of the ascending pipeline (13).

5. Apparatus of claim 4, **characterized in that** a densitometer (31) is arranged in the additional partial circuit (26) between the aeration device (21) and the pressure keeping valve (25).

6. Apparatus of claim 5, **characterized in that** a control unit (32) is provided processing a signal from the densitometer (31) and controlling the both pumps (12, 20) in the ascending pipeline (13) and in the additional partial circuit (26) and/or the aeration device (21) in response to the signal.

7. Apparatus of claim 4, **characterized in that** the circulation pump (12) positioned in the ascending pipeline (13) is designed to be a pawl-type pump.

8. Apparatus of claim 4, **characterized in that** a gear pump (20) is arranged in the additional partial circuit (19, 26).

9. Apparatus of claim 4, **characterized in that** a mixing device (15) is positioned in the ascending pipeline (13).

10. Apparatus of claim 9, **characterized in that** the missing device (15) is designed to be a static mixer.

## Revendications

1. Procédé pour aérer une pâte contenant de la graisse, en particulier une pâte de chocolat, dans une machine d'enrobage (8), dans laquelle une première partie de la pâte est amenée, depuis le bac (7) de la machine d'enrobage (8), par une conduite montante (13), à une tête d'enrobage (10), et une deuxième partie de la pâte est aérée dans un circuit partiel supplémentaire, **caractérisé en ce que** la deuxième partie de la pâte, transportée dans le circuit partiel supplémentaire (26), est aérée sous surpression et détendue, et **en ce que** la deuxième partie de la pâte, aérée et détendue, est introduite dans la conduite montante (13) et y est mélangée à la première partie de la pâte.

2. Procédé selon la revendication 1, **caractérisé en ce que** la deuxième partie de la pâte est ajoutée à la première partie de la pâte dans la zone initiale (14) de la conduite montante (13).

3. Procédé selon la revendication 1, **caractérisé en ce que** la deuxième partie de la pâte est ajoutée au bac (7) de la machine d'enrobage (8).

4. Dispositif pour aérer une pâte contenant de la graisse, en particulier une pâte de chocolat, comportant une machine d'enrobage (8) qui comporte une conduite montante (13) avec une pompe de circulation (12) pour le transport d'une première partie de la pâte, du bac (7) de la machine d'enrobage (8) vers une tête d'enrobage (10), et dans lequel un circuit partiel supplémentaire est prévu avec un dispositif d'aération (21), **caractérisé en ce que** le dispositif d'aération (21) et une soupape de maintien en pression (25) couplée en aval sont disposés dans le circuit partiel supplémentaire (26), et **en ce que** le circuit partiel supplémentaire (26) est raccordé à la zone initiale (14) de la conduite montante (13).

5. Dispositif selon la revendication 4, **caractérisé en ce qu'**un densimètre (31) est prévu dans le circuit partiel supplémentaire (26), entre le dispositif d'aération (21) et la soupape de maintien en pression (25).

6. Dispositif selon la revendication 5, **caractérisé en ce qu'**il est prévu un dispositif de commande ou de régulation (32) qui traite un signal fourni par le densimètre (31) et commande ainsi les deux pompes (12, 20) dans la conduite montante (13) et dans le circuit partiel supplémentaire (26) et/ou le dispositif d'aération (21).

7. Dispositif selon la revendication 4, **caractérisé en ce que** la pompe de circulation (12) est réalisée dans la conduite montante (13) en tant que pompe à cliquet.

8. Dispositif selon la revendication 4, **caractérisé en ce que** dans le circuit partiel supplémentaire (19, 26) est disposée une pompe à engrenages (20).

9. Dispositif selon la revendication 4, **caractérisé en ce qu'**un dispositif de malaxage (15) est disposé dans la conduite montante (13).

10. Dispositif selon la revendication 9, **caractérisé en ce que** le dispositif de malaxage (15) est réalisé comme malaxeur statique.
